# EUROPÄISCHE PATENTSCHRIFT

(11) **EP 3 676 140 B1**
(45) Veröffentlichungstag und Bekanntmachung des Hinweises auf die Patenterteilung: **07.07.2021**
(21) Anmeldenummer: 18765038.7
(22) Anmeldetag: 22.08.2018
(51) Int. Cl.: B60T 13/66, B60T 17/22, B61H 5/00

(54) **BREMSAKTUATOR FÜR EIN SCHIENENFAHRZEUG**
BRAKE ACTUATOR FOR A RAIL VEHICLE
ACTIONNEUR DE FREIN POUR VÉHICULE FERROVIAIRE

(30) Priorität: 31.08.2017 DE 102017215293
(43) Veröffentlichungstag der Anmeldung: 08.07.2020
(73) Patentinhaber: KNORR-BREMSE Systeme für Schienenfahrzeuge GmbH, 80809 München (DE)
(72) Erfinder: VOLLMER, Achim, 82041 Deisenhofen (DE)
(86) Internationale Anmeldenummer: PCT/EP2018/072627
(87) Internationale Veröffentlichungsnummer: WO 2019/042835

(56) Entgegenhaltungen:
- WO-A2-2013/034719
- DE-A1-102006 058 566
- DE-A1-102012 219 984
- US-A1- 2007 250 246

## Beschreibung

Die vorliegende Erfindung bezieht sich auf einen Bremsaktuator für ein Schienenfahrzeug, insbesondere auf einen Bremsaktuator für ein Schienenfahrzeug, der autark funktionieren kann.

Bei Betriebsbremsungen wird die erforderliche Bremskraft in aktuellen Schienenfahrzeugen kontinuierlich berechnet. Diese Berechnung erfolgt auf Basis einer gefahrenen Geschwindigkeit, eines Beladungszustands, einer Bremsanforderung und einer Verfügbarkeit von anderen Bremssystemen.

Dokument DE 10 2012 219984 A1 offenbart einen Bremsaktuator mit einem Sensor zum Ermitteln einer Anpressgröße des Bremsaktuators, einem Sensor zum Ermitteln einer Verzögerungsgröße und einem Raddrehzahlsensor, wobei eine Sollwertregelungseinrichtung die Anpressgröße so einstellt, dass ein Istwert der Verzögerungsgröße einem Sollwert entspricht.

Im Dokument DE 10 2006 058566 A1 ist eine schwingungs- und geräuschminimierende Bremssteuerung, die Sensordaten, die Messwerte über die an einer Bremse auftretenden akustischen und fühlbaren Schwingungen liefen, auswertet, gezeigt. Dabei werden physikalische Messwerte, beispielsweise eine Zuspannkraft oder eine Temperatur, erfasst, sowie Schwingungen über Beschleunigungssensoren erfasst.

WO 2013/034719 A2 offenbart eine Bremssteuereinrichtung zum Durchführen einer Zustandsanalyse eines Schienenfahrzeugs wobei ein Schwingungssensor und weitere Sensoren, wie beispielsweise ein Raddrehzahlsensor und ein Entgleisungssensor, vorgesehen sind.

Das Dokument 2007/0250246 A1 beschreibt ein Verfahren zum Erfassen von Veränderung in einer Betriebscharakteristik von mechanischen Systemen, wie etwa Schienenfahrzeugbremsen, wobei Betätigungsimpulse erfasst und ausgewertet werden.

Bei einer Notbremsung ist eine von einem Bremsaktuator lokal aufzubringende Bremskraft definiert, wobei diese Bremskraft ebenfalls von dem Beladungszustand und der Geschwindigkeit abhängig ist. Wenn jedoch ein Geschwindigkeitssignal gestört ist oder eine Kommunikation zwischen dem Bremsaktuator und einem übergeordneten Steuerungssystem, das ein Geschwindigkeitssignal ausgibt, gestört ist, kann die Geschwindigkeit des Schienenfahrzeugs nicht berücksichtigt werden. Aus diesem Grund werden Bremsen in Richtung "fail-safe" ausgelegt, so dass beim Bremsen eine maximal mögliche Geschwindigkeit angenommen wird, und die Bremsen werden dementsprechend dimensioniert.

Eine solche Dimensionierung kann aber zu einer Überdimensionierung führen, so dass erhöhte Kosten entstehen. Andererseits kann es in einem Fehlerfall, nämlich dem Fehlen einer Geschwindigkeitsinformation, zu einer Verlängerung eines sicherheitsrelevanten Bremswegs kommen oder zu einer thermischen Überlastung der Bremsausrüstung führen.

Ferner wird, da jedem Bremsaktuator zugeordnete Geschwindigkeitssensoren zu aufwändig sind, die Berechnung der Bremskraft und eine Ansteuerung der Bremsaktuator in aktuellen Bremssystemen auf Wagen- oder Drehgestellebene durchgeführt. Ein Ausfall einer Geschwindigkeitsinformation betrifft demensprechend auch immer eine solche Einheit.

Der Erfindung liegt die Aufgabe zugrunde, Bremsaktuatoren bereitzustellen, die die obigen Nachteile eliminieren und sichere Bremsungen ermöglichen, ohne überdimensioniert zu sein.

Die Aufgabe wird durch einen Bremsaktuator gemäß Anspruch 1 und ein Verfahren gemäß Anspruch 7 gelöst. Vorteilhafte Weiterentwicklungen sind Gegenstand der abhängigen Ansprüche.

Durch einen Bremsaktuator gemäß den Aspekten des Anspruchs 1 kann ein Erzeugen eines Zusammenhangs zwischen einer Geschwindigkeit eines Schienenfahrzeugs mit einer durch einen Bremsaktuator erzeugten Bremskraft und einer Frequenz von durch die Bremskraft in dem Bremsaktuator erzeugten Schwingungen und somit eine Bestimmung der Geschwindigkeit aus den an dem Bremsaktuator verfügbaren Informationen lediglich über zusätzliche Sensoren für ein Erfassen einer erzeugten Bremskraft und ein Erfassen von durch die Bremskraft in den Bremsaktuatoren erzeugten Schwingungen erfolgen.

Somit muss kein redundantes Kommunikationssystem vorgesehen werden, oder eine Überdimensionierung der Bremsen durchgeführt werden. Bei einer erkannten Notbremsung kann ferner ein lokaler Bremsaktuator eine geschwindigkeitsabhängige Notbremsung durchführen, ohne auf eine von Geschwindigkeitssensoren gemessene Geschwindigkeit oder eine Kommunikation mit einer Fahrzeugebene zurückgreifen zu müssen. Ferner kann ein sicherheitsrelevanter Bremsweg durch eine geringe Ausfallrate der Bremsaktuatoren verbessert werden.

In einer vorteilhaften Weiterbildung weist der Bremsaktuator ein Anpressteil, also beispielsweise einen Bremsbelag, auf, das konfiguriert ist, gegen eine Bremsscheibe gedrückt zu werden. Durch das Drücken des Anpressteils an die Bremsscheibe können sowohl die Bremskraft als auch die durch das Drücken an die Bremsscheibe erzeugten Schwingungen einfach in jedem Bremsaktuator erfasst werden.

In einer weiteren vorteilhaften Weiterentwicklung werden die Bremskraft und die durch die Bremskraft erzeugten Schwingungen durch einen einzigen Sensor erfasst. Ein solcher Sensor stützt beispielsweise einen Bremskrafterzeuger innerhalb eines Bremssattels des Bremsaktuators entgegen der Bremskraft ab, so dass gleichzeitig sowohl die Bremskraft als auch Schwingungen, die beispielsweise durch die Reibung eines Anpressteils an einer Bremsscheibe oder durch eine Unwucht der Bremsscheibe hervorgerufen werden, durch diesen Sensor erfasst werden können. Dadurch reduziert sich die Anzahl der Bauteile und somit werden die Kosten reduziert.

Wenn der Bremskrafterzeuger in einem Normalbetrieb in einer vorteilhaften Weise mit einem übergeordneten Steuerungssystem, das konfiguriert ist, ein Geschwindigkeitssignal des Schienenfahrzeugs bereit zu stellen, verbunden ist, kann im Normalbetrieb auf dieses Geschwindigkeitssignal zurückgegriffen werden, um die geschwindigkeitsabhängige Bremskraft zu berechnen, und auch eine Zuordnung der Geschwindigkeit zu der erzeugten Bremskraft und durch die Bremskraft erzeugten Schwingungen kann erzeugt werden.

Vorteilhafterweise ist die Steuerungseinheit konfiguriert, bei einem Stillstand des Schienenfahrzeugs ein Stillstandsignal auszugeben. Dieses von Geschwindigkeitssensoren unabhängige Stillstandsignal kann dann beispielsweise durch das übergeordnete Steuerungssystem zu Plausibilisieren eines sicherheitsrelevanten Stillstandsignals, beispielsweise für eine Freigabe zum Öffnen von Türen, verwendet werden. Da eine Vielzahl von Bremsaktuatoren im Schienenfahrzeug vorgesehen ist, ist eine Verfügbarkeit des Stillstandsignals hoch, wohingegen Stillstandsignale von Geschwindigkeitssensoren beispielsweise durch Einflüsse von elektrischen Feldern unzuverlässig sein können.

In einer vorteilhaften Weiterentwicklung ist die Steuerungseinheit konfiguriert, Anteile der Frequenz über eine Berechnung von Korrelationsfaktoren über eine Berechnung der Standardabweichung, eine "schnelle Fourier-Transformation - FFT" oder eine "diskrete Fourier-Transformation - DFT" zu ermitteln. Dadurch können in einer einfachen Weise Koeffizienten berechnet werden, die für die Bestimmung des Zusammenhangs zwischen der Geschwindigkeit eines Schienenfahrzeugs mit der durch den Bremsaktuator erzeugten Bremskraft und der Frequenz der durch die Bremskraft in dem Bremsaktuator erzeugten Schwingungen verwendet werden können.

Durch das Verfahren mit den Aspekten gemäß Anspruch 7 kann ein Erzeugen eines Zusammenhangs zwischen einer Geschwindigkeit eines Schienenfahrzeugs mit einer durch einen Bremsaktuator erzeugten Bremskraft und einer Frequenz von durch die Bremskraft in dem Bremsaktuator erzeugten Schwingungen und somit eine Bestimmung der Geschwindigkeit aus den an dem Bremsaktuator verfügbaren Informationen lediglich über zusätzliche Sensoren für ein Erfassen einer erzeugten Bremskraft und ein Erfassen von durch die Bremskraft in den Bremsaktuatoren erzeugten Schwingungen erfolgen. Somit muss kein redundantes Kommunikationssystem vorzusehen sein, oder keine Überdimensionierung der Bremsen durchgeführt werden.

In einer vorteilhaften Weiterbildung des Verfahrens, in der das Geschwindigkeitssignal über das übergeordnete Steuerungssystem bereitgestellt wird, kann im Normalbetrieb auf dieses Geschwindigkeitssignal zurückgegriffen werden, um die geschwindigkeitsabhängige Bremskraft zu berechnen, und auch eine Zuordnung der Geschwindigkeit zu der erzeugten Bremskraft und der durch die Bremskraft erzeugten Schwingungen kann erzeugt werden.

Das Verfahren kann, durch eine Umrechnung der Geschwindigkeit des Schienenfahrzeugs, in eine Rotationsgeschwindigkeit der Bremsscheibe berechnete Frequenzen in einer vorteilhaften Weise einer Drehzahl der Bremsscheibe zuordnen.

Wenn die Schritte zum Bestimmen der Geschwindigkeit des Schienenfahrzeugs mit dem Bremsaktuator während Betriebsbremsungen durchgeführt werden, ist es möglich, die Zuordnung ohne beispielsweise zusätzliche Probebremsungen durchzuführen.

Bei einem vorteilhaften Ausgeben des Stillstandsignals bei dem Stillstand des Schienenfahrzeugs kann dieses von Geschwindigkeitssensoren unabhängige Stillstandsignal dann beispielsweise durch das übergeordnete Steuerungssystem zu Plausibilisieren eines sicherheitsrelevanten Stillstandsignals, beispielsweise für eine Freigabe zum Öffnen von Türen, verwendet werden.

Die Anteile der Frequenz können vorteilhafterweise über eine Berechnung von Korrelationsfaktoren über die Berechnung der Standardabweichung, die "schnelle Fourier-Transformation - FFT" oder die "diskrete Fourier-Transformation - DFT" ermittelt werden. Dadurch können in einer einfachen Weise Koeffizienten berechnet werden, die für die Bestimmung des Zusammenhangs zwischen der Geschwindigkeit eines Schienenfahrzeugs mit der durch einen Bremsaktuator erzeugten Bremskraft und der Frequenz der durch die Bremskraft in dem Bremsaktuator erzeugten Schwingungen verwendet werden können.

Vorzugsweise werden die Koeffizienten in einem Kennfeld gespeichert, um, in einem Fall eines Fehlens einer Geschwindigkeitsinformation des übergeordneten Steuerungssystems, für jeden Bremsaktuator geeignete geschwindigkeitsabhängige Bremsparameter zu verwenden.

Wenn das Kennfeld vorteilhafterweise kontinuierlich, nämliche beispielsweise bei jeder Betriebsbremsung, angepasst wird, können Änderungen des Bremssystems durch Alterung und Verschleiß einfach berücksichtigt werden.

Bei einer Unterbrechung der Kommunikation kann die Steuerungseinheit die Geschwindigkeit des Schienenfahrzeugs aus der erfassten erzeugten Bremskraft, der durch die Bremskraft in dem Bremsaktuator erzeugten Schwingungen und den in dem Kennfeld gespeicherten Koeffizienten ermitteln und somit eine geeignete aufzubringende Bremskraft bestimmen, um eine geschwindigkeitsabhängige Bremsung durchzuführen.

Die Erfindung wird nun anhand eines Ausführungsbeispiels unter Bezugnahme auf die beigefügte Zeichnung erläutert.

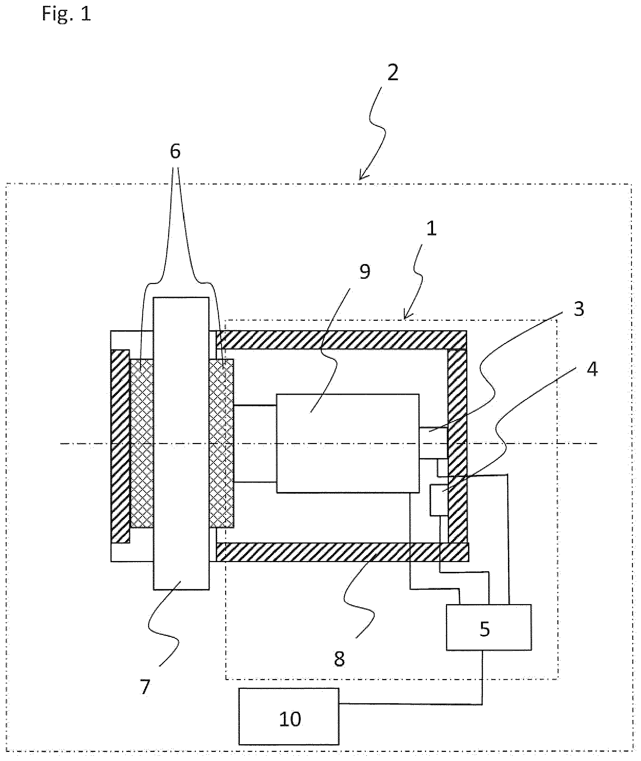

Fig. 1 zeigt eine schematische Darstellung eines Schienenfahrzeugs mit einem erfindungsgemäßen Bremsaktuator.

In **Fig.** 1 ist schematisch ein Schienenfahrzeug 2 dargestellt, das einen Bremsaktuator 1 aufweist. Der Bremsaktuator 1 ist jeweils einer Bremse des Schienenfahrzeugs 2, die hier als eine Bremsscheibe 7 repräsentiert wird, zugeordnet. Es ist aber alternativ nicht zwingend erforderlich, dass jeder Bremse ein erfindungsgemäßer Bremsaktuator 1 zugeordnet ist.

Der Bremsaktuator 1 weist einen Sensor zum Erfassen einer Bremskraft 3, mittels dessen eine in dem Bremsaktuator 1 erzeugte Bremskraft erfasst wird, auf. Ferner weist der Bremsaktuator 1 einen Sensor zum Erfassen von Schwingungen 4 auf, mittels dessen durch die Bremskraft in dem Bremsaktuator 1 erzeugte Schwingungen erfasst werden. Der Sensor zum Erfassen einer Bremskraft 3 und der Sensor zum Erfassen von Schwingungen 4 können alternativ auch als ein einziger Sensor ausgebildet sein, wobei dieser dann an der Stelle angeordnet sein kann, an dem der Sensor zum Erfassen einer Bremskraft 3 dargestellt ist. Damit können dann sowohl die erzeugte Bremskraft als auch die durch die Bremskraft erzeugten Schwingungen erfasst werden.

Ferner weist der Bremsaktuator 1 eine Steuerungseinheit 5 auf. Der Sensor zum Erfassen einer Bremskraft 3 und der Sensor zum Erfassen von Schwingungen 4 sind mit der Steuerungseinheit 5 verbunden. Die Steuerungseinheit 5 ist konfiguriert, einen Zusammenhang einer Geschwindigkeit des Schienenfahrzeugs 2 mit der erzeugten Bremskraft und einer Frequenz der durch die Bremskraft erzeugten Schwingungen zu erzeugen. Bei einem Stillstand des Schienenfahrzeugs erzeugt die Steuerungseinheit 6 optional ein Stillstandsignal und gibt es aus. Ferner ist die Steuerungseinheit 5 konfiguriert, Anteile der Frequenz der durch die Bremskraft erzeugten Schwingungen über eine Berechnung von Korrelationsfaktoren über eine Berechnung der Standardabweichung, eine "schnelle Fourier-Transformation" (FFT) oder eine "diskrete Fourier-Transformation" (DFT) zu ermitteln.

Der Bremsaktuator 1 weist außerdem ein Anpressteil 6, beispielsweise einen Bremsbelag, auf. Dieses Anpressteil 6 wird gegen die Bremsscheibe 7 gedrückt. Auf der bezüglich der Bremsscheibe 7 gegenüberliegenden Seite ist ein weiteres Anpressteil 6 dargestellt, um die Bremsscheibe 7 dazwischen einklemmen und bremsen zu können. Dazu weist die Bremse einen Bremssattel 8 auf, der gegenüber der Bremsscheibe 7 verschiebbar sein kann.

In dem Bremssattel 8 ist ferner ein Bremskrafterzeuger 9 vorgesehen, der hier zwischen einem der Anpressteile 6 und dem Sensor zum Erfassen einer Bremskraft 3 dargestellt ist. Der Bremskrafterzeuger 9 ist beispielsweise ein Druckluftzylinder.

Der Bremsaktuator 1 ist im Normalbetrieb mit einen übergeordneten Steuerungssystem 10, das ein Geschwindigkeitssignal des Schienenfahrzeugs 2 zur Verfügung stellt, verbunden. Der Normalbetrieb ist ein Betrieb ohne Störung, wie beispielsweise eine Unterbrechung einer Kommunikation zwischen der Steuerungseinheit 5 und dem übergeordneten Steuerungssystem 10, so dass der Steuerungseinheit 6 kein Geschwindigkeitssignal zur Verfügung gestellt werden kann.

Im Betrieb kann die Steuerungseinheit 5 während Betriebsbremsungen die in dem Bremsaktuator 1 erzeugte Bremskraft erfassen. Ferner erfasst die Steuerungseinrichtung 5 die durch die Bremskraft in dem Bremsaktuator 1 erzeugten Schwingungen. Die durch die Bremskraft in dem Bremsaktuator 1 erzeugten Schwingungen rühren von Schwingungen durch das Drücken des Anpressteils 6 an die Bremsscheibe 7 oder durch eine Unwucht der Bremsscheibe 7 her. Dann erzeugt die Steuerungseinheit 5 den Zusammenhang der Geschwindigkeit des Schienenfahrzeugs 2 mit der erzeugten Bremskraft und der Frequenz der durch die Bremskraft in dem Bremsaktuator 1 erzeugten Schwingungen. Anteile der Frequenz werden über die Berechnung der Korrelationsfaktoren über die Berechnung der Standardabweichung, die "schnelle Fourier-Transformation" (FFT) oder die "diskrete Fourier-Transformation" (DFT) ermittelt. Aus den Berechnungen werden Koeffizienten bestimmt, die dann in der Steuerungseinheit 5 in einem Kennfeld gespeichert werden. Das Kennfeld wird bei Betriebsbremsungen kontinuierlich angepasst.

Die Geschwindigkeit des Schienenfahrzeugs 2 wird von dem übergeordneten Steuerungssystem 10 bereitgestellt und von der Steuerungseinheit 5 in eine Rotationsgeschwindigkeit der Bremsscheibe 7 umgerechnet.

Die Steuerungseinheit 5 kann ferner während eines Stillstands des Schienenfahrzeugs 2 ein Stillstandsignal ausgeben.

Bei der Unterbrechung der Kommunikation zwischen der Steuerungseinheit 5 und dem übergeordneten Steuerungssystem 10 kann die Geschwindigkeit des Schienenfahrzeugs 2 aus der erfassten Bremskraft, der durch die Bremskraft erzeugten Schwingungen und den im Kennfeld gespeicherten Koeffizienten ermittelt werden und trotz der Unterbrechung der Kommunikation kann eine geschwindigkeitsabhängige Bremsung durchgeführt werden.

### BEZUGSZEICHENLISTE

- 1: Bremsaktuator
- 2: Schienenfahrzeug
- 3: Sensor zum Erfassen einer Bremskraft
- 4: Sensor zum Erfassen von Schwingungen
- 5: Steuerungseinheit
- 6: Anpressteil
- 7: Bremsscheibe
- 8: Bremssattel
- 9: Bremskrafterzeuger
- 10: übergeordnetes Steuerungssystem

## Patentansprüche

1. Bremsaktuator (1) für ein Schienenfahrzeug (2) mit
einem Sensor (3) zum Erfassen einer in dem Bremsaktuator (1) erzeugten Bremskraft,
einem Sensor (4) zum Erfassen von durch die Bremskraft in dem Bremsaktuator (1) erzeugten Schwingungen, und
einer Steuerungseinheit (5), **dadurch gekennzeichnet, dass**
die Steuerungseinheit (5) konfiguriert ist, einen Zusammenhang einer Geschwindigkeit des Schienenfahrzeugs (2) mit der erzeugten Bremskraft und einer Frequenz der durch die Bremskraft erzeugten Schwingungen zu erzeugen.

2. Bremsaktuator (1) gemäß Anspruch 1, wobei
der Bremsaktuator (1) ein Anpressteil (6) aufweist, das dazu konfiguriert ist, an eine Bremsscheibe (7) gedrückt zu werden.

3. Bremsaktuator (1) gemäß einem der Ansprüche 1 oder 2, wobei
der Sensor (3) zum Erfassen der in dem Bremsaktuator (1) erzeugten Bremskraft und der Sensor (4) zum Erfassen von durch die Bremskraft in dem Bremsaktuator (1) erzeugten Schwingungen als ein einziger Sensor ausgebildet sind.

4. Bremsaktuator (1) gemäß einem der vorangehenden Ansprüche, wobei
die Steuerungseinheit (5) in einem Normalbetrieb mit einem übergeordneten Steuerungssystem (10) verbunden ist, das konfiguriert ist, ein Geschwindigkeitssignal des Schienenfahrzeugs (2) bereitzustellen.

5. Bremsaktuator (1) gemäß einem der vorangehenden Ansprüche, wobei
die Steuerungseinheit (5) konfiguriert ist, bei einem Stillstand des Schienenfahrzeugs (2), ein Stillstandsignal zu erzeugen.

6. Bremsaktuator (1) gemäß einem der vorangehenden Ansprüche, wobei
die Steuerungseinheit (5) konfiguriert ist, Anteile der Frequenz über eine Berechnung von Korrelationsfaktoren über eine Berechnung der Standardabweichung, eine "schnellen Fourier-Transformation - FFT" oder eine "diskrete Fourier-Transformation - DFT" zu ermitteln.

7. Verfahren zum Bestimmen einer Geschwindigkeit eines Schienenfahrzeugs (2) mit einem Bremsaktuator (1) gemäß einem der Ansprüche 1 bis 6 mit den Schritten
Erfassen einer in dem Bremsaktuator (1) erzeugten Bremskraft;
Erfassen von in dem Bremsaktuator (1) durch die Bremskraft erzeugten Schwingungen;
Erzeugen eines Zusammenhangs der Geschwindigkeit des Schienenfahrzeugs (2) mit der erzeugten Bremskraft und einer Frequenz der durch die Bremskraft erzeugten Schwingungen.

8. Verfahren gemäß Anspruch 7, wobei die Geschwindigkeit von einem übergeordneten Steuerungssystem (10) bereitgestellt wird.

9. Verfahren gemäß Anspruch 7 oder 8, wobei die Geschwindigkeit des Schienenfahrzeugs (2) in eine Rotationsgeschwindigkeit einer Bremsscheibe (7) umgerechnet wird.

10. Verfahren gemäß einem der Ansprüche 7 bis 9, wobei
die Schritte während Betriebsbremsungen durchgeführt werden.

11. Verfahren gemäß einem der Ansprüche 7 bis 10, wobei
bei einem Stillstand des Schienenfahrzeugs (2) ein Stillstandsignal ausgegeben wird.

12. Verfahren gemäß einem der Ansprüche 7 bis 11, wobei
Anteile der Frequenz über eine Berechnung der Korrelationsfaktoren über die Berechnung der Standardabweichung, die "schnelle Fourier-Transformation - FFT" oder die "diskrete Fourier-Transformation - DFT" ermittelt werden.

13. Verfahren gemäß Anspruch 12, mit den Schritten
Bestimmen von Koeffizienten aus den Korrelationsfaktoren;
Speichern der Koeffizienten in einem Kennfeld.

14. Verfahren gemäß Anspruch 13, wobei
das Kennfeld kontinuierlich angepasst wird.

15. Verfahren gemäß einem der Ansprüche 13 oder 14, wobei
die Steuerungseinheit (5), bei einer Unterbrechung einer Kommunikation, die Geschwindigkeit aus der erfassten erzeugten Bremskraft, der durch die Bremskraft erzeugten Schwingungen und den in dem Kennfeld gespeicherten Koeffizienten ermittelt.

## Claims

1. Brake actuator (1) for a rail vehicle (2) having
a sensor (3) for detecting a brake force produced in the brake actuator (1),
a sensor (4) for detecting oscillations produced by the brake force in the brake actuator (1), and
a control unit (5),
**characterised in that**
the control unit (5) is configured to produce a relationship of a speed of the rail vehicle (2) with the brake force produced and a frequency of the oscillations produced by the brake force.

2. Brake actuator (1) according to claim 1, wherein
the brake actuator (1) has a pressing component (6) which is configured to be pressed against a brake disc (7).

3. Brake actuator (1) according to either claim 1 or claim 2, wherein
the sensor (3) for detecting the brake force produced in the brake actuator (1) and the sensor (4) for detecting oscillations produced by the brake force in the brake actuator (1) are constructed as a single sensor.

4. Brake actuator (1) according to one of the preceding claims, wherein
the control unit (5) is connected during normal operation to a superordinate control system (10) which is configured to provide a speed signal of the rail vehicle (2).

5. Brake actuator (1) according to one of the preceding claims, wherein
the control unit (5) is configured to produce a stop signal in the event of a stoppage of the rail vehicle (2).

6. Brake actuator (1) according to one of the preceding claims, wherein
the control unit (5) is configured to establish portions of the frequency via a calculation of correlation factors via a calculation of the standard deviation, a "fast Fourier transformation - FFT" or a "discrete Fourier transformation - DFT".

7. Method for determining a speed of a rail vehicle (2) with a brake actuator (1) according to one of claims 1 to 6 with the steps of
detecting a brake force produced in the brake actuator (1);
detecting oscillations produced by the brake force in the brake actuator (1);
producing a relationship of the speed of the rail vehicle (2) with the brake force produced and a frequency of the oscillations produced by the brake force.

8. Method according to claim 7, wherein the speed is provided by a superordinate control system (10).

9. Method according to claim 7 or claim 8, wherein the speed of the rail vehicle (2) is converted into a rotation speed of a brake disc (7).

10. Method according to one of claims 7 to 9, wherein
the steps are carried out during service braking operations.

11. Method according to one of claims 7 to 10, wherein
a stop signal is transmitted in the event of a stoppage of the rail vehicle (2).

12. Method according to one of claims 7 to 11, wherein
portions of the frequency are established via a calculation of the correlation factors via the calculation of the standard deviation, the "fast Fourier transformation - FFT" or the "discrete Fourier transformation - DFT".

13. Method according to claim 12, having the steps of
determining coefficients from the correlation factors;
storing the coefficients in a characteristic diagram.

14. Method according to claim 13, wherein
the characteristic diagram is continuously adapted.

15. Method according to either claim 13 or claim 14, wherein
the control unit (5), in the event of an interruption of a communication, establishes the speed from the detected brake force produced, the oscillations produced by the brake force and the coefficients stored in the characteristic diagram.

## Revendications

1. Actionneur (1) de frein d'un véhicule (2) ferroviaire comprenant
un capteur (3) de détection d'une force de freinage produite dans l'actionneur (1) de frein,
un capteur (4) de détection de vibrations produites dans l'actionneur (1) de frein par la force de freinage, et
une unité (5) de commande, **caractérisée en ce que**
l'unité (5) de commande est configurée pour produire une relation d'une vitesse du véhicule (2) ferroviaire avec la force de freinage produite et avec une fréquence des vibrations produites par la force de freinage.

2. Actionneur (1) de frein suivant la revendication 1, dans lequel
l'actionneur (1) de frein a une partie (6) de pression, qui est configurée pour appuyer sur un disque (7) de frein.

3. Actionneur (1) de frein suivant l'une des revendications 1 ou 2, dans lequel
le capteur (3) de détection de la force de freinage produite par l'actionneur (1) de frein et le capteur (4) de détection de vibrations produites dans l'actionneur (1) de frein par la force de freinage sont constitués sous la forme d'un capteur unique.

4. Actionneur (1) de frein suivant l'une des revendications précédentes, dans lequel
l'unité (5) de commande est reliée en fonctionnement normal à un système (10) de commande supérieur hiérarchiquement, qui est configuré pour mettre à disposition un signal de vitesse du véhicule (2) ferroviaire.

5. Actionneur (1) de frein suivant l'une des revendications précédentes, dans lequel
l'unité (5) de commande est configurée pour produire, lorsque le véhicule (2) ferroviaire est à l'arrêt, un signal d'arrêt.

6. Actionneur (1) de frein suivant l'une des revendications précédentes, dans lequel
l'unité (5) de commande est configurée pour déterminer des parties de la fréquence par un calcul de facteurs de corrélation, par un calcul de l'écart-type une "transformation de Fourier rapide-FFT" ou une "transformation de Fourier discrète-DFT".

7. Procédé de détermination de la vitesse d'un véhicule (2) ferroviaire comprenant un actionneur (1) de frein suivant l'une des revendications 1 à 6 par les stades
détection d'une force de freinage produite dans l'actionneur (1) de frein ;
détection de vibrations produites dans l'actionneur (1) de frein par la force de freinage;
production d'une relation de la vitesse du véhicule (2) ferroviaire avec la force de freinage produite et une fréquence des vibrations produites par la force de freinage.

8. Procédé suivant la revendication 7, dans lequel on se procure la vitesse par un système (10) de commande supérieur hiérarchiquement.

9. Procédé suivant la revendication 7 ou 8, dans lequel on transforme la vitesse du véhicule (2) ferroviaire en une vitesse de rotation d'un disque (7) de frein.

10. Procédé suivant l'une des revendications 7 à 9, dans lequel on effectue les stades pendant des freinages de service.

11. Procédé suivant l'une des revendications 7 à 10, dans lequel
on émet un signal d'arrêt lors d'un arrêt du véhicule (2) ferroviaire.

12. Procédé suivant l'une des revendications 7 à 11, dans lequel
on détermine des parties de la fréquence par un calcul des facteurs de corrélation par le calcul de l'écart-type, la "transformation de Fourier rapide-FFT" ou la "transformation de Fourier discrète-DFT".

13. Procédé suivant la revendication 12, comprenant les stades
Détermination de coefficients à partir des facteurs de corrélation ;
Mise en mémoire des coefficients dans un champ caractéristique.

14. Procédé suivant la revendication 13, dans lequel
on adapte le champ caractéristique en continu.

15. Procédé suivant l'une des revendications 13 ou 14, dans lequel
l'unité (5) de commande détermine, lorsqu'une communication est interrompue, la vitesse à partir de la force de freinage produite, qui est détectée, des vibrations produites par la force de freinage et des coefficients mis en mémoire dans le champ caractéristique.
